# EUROPEAN PATENT SPECIFICATION

(11) **EP 0 740 624 B1**
(45) Date of publication and mention of the grant of the patent: **20.10.1999**
(21) Application number: 95907809.8
(22) Date of filing: 26.01.1995
(51) Int. Cl.: B62B 5/04

(54) **A SECURITY DEVICE**
SICHERHEITSVORRICHTUNG
DISPOSITIF DE SECURITE

(30) Priority: 26.01.1994 IE 940071; 18.03.1994 IE 940242
(43) Date of publication of application: 06.11.1996
(73) Proprietor: Kart Security Limited, Dublin 4 (IE)
(72) Inventor: SHORTT, Matthew, Gerard, Dublin 22 (IE); SLACK, Norman, Tallaght Dublin 24 (IE); SAVAGE, James, Kill County Kildare (IE); HOOD, Oliver, Ballsbridge Dublin 4 (IE); O'SULLIVAN, Niall, Dublin 2 (IE)
(74) Representative: Schütte, Gearoid
(86) International application number: IE9500010
(87) International publication number: WO9520515

(56) References cited:
- WO-A-92/15476
- US-A- 3 090 470
- US-A- 3 366 201
- US-A- 3 892 295

## Description

### Introduction

The invention relates to a security device, and in particular to a security device for the prevention of unauthorised use of a trolley or the like wheeled vehicle.

The term trolley as used in this specification means any trolley or handcart of the type commonly used in supermarkets, airports and the like for carrying goods or luggage or any similar type of mobile object, cart or vehicle.

Many supermarkets provide trollies so that customers can conveniently carry goods about the premises. Customers on occasion remove trollies from the premises if, for example, they have a car parked some distance away to carry their purchased goods to the car. Unfortunately, they very often do not return the trolley to the supermarket premises simply leaving it at the roadside. A significant number of trollies are lost or damaged each year because of this. Apart from the inconvenience to other shoppers, it results in increased prices as the cost of replacement or repair of a trolley is passed on to the consumer.

There is therefore a need for a security device which will restrict the use of trollies to a defined area such as a supermarket premises.

The present invention is directed toward providing such a security device.

The invention is particularly concerned with a security device of the type comprising a support body having means for attachment to the vehicle, brake means for a ground-engaging wheel on the trolley, a brake means being movable between a disengaged inoperative position and an engaged operative wheel-braking position, a brake trigger mounted on the support body operable to move the brake means between the disengaged inoperative position and the engaged wheel-braking position, and stop means for mounting at an exit of the premises for engagement by and operation of the brake trigger to brake the wheel. A device of this type is disclosed in U.S. Patent Specification No. 3892295. In this case the braking mechanism is operated by a small actuating wheel mounted alongside the trolley wheel when this actuating wheel drops into an associated groove or slot provided at an exit of the premises. Patent Specification WO 92/15476 discloses a trolley braking device having a magnetically operated trigger which is operable when passed in close proximity to magnetic material at the boundary of a designated area to cause a braking member to lower and engage with the ground.

U.S. 3090470 discloses a braking device for a shopping trolley having a wheel is pivotally movable downwardly into a locked position when the trolley is wheeled off a kerb of a path or other surface having an abrupt change in alleviation. U.S. 3366201 shows a wheel lock for a shopping cart which is operable to lock the wheel when the cart travels over the kerb of a path.

### Statements of Invention

The present invention is characterised in that the stop means comprises a number of trip buttons or projections for mounting spaced-apart across an exit of the premises, each trip button projecting upwardly from the ground at the exit for engagement with and operation of the brake trigger when the vehicle is wheeled across the exit.

In one embodiment of the invention, the wheel and the brake means are movable relative to each other between a separated released position and an engaged braked position, wherein one of the wheel and the brake means forms a fixed part on the support body and the other of the wheel and the brake means forms a movable part on the support body being movable between the released position and the engaged position, wherein the movable part is carried on a support arm which is mounted on the body for movement between the released position and the engaged position, the brake trigger being provided on the support arm, and wherein the support arm is pivotally mounted on the support body.

Preferably, the wheel is mounted on the support arm and the brake means is mounted on the body.

In another embodiment, latch means is provided for releasable retaining the support arm in the released position. Preferably, the latch means is a latch arm pivotally mounted on the body and releasable engagable with the support arm. In a preferred arrangement, the latch arm has a pair of spaced-apart slots corresponding to the released position and the engaged position, the slots engagable by the support arm to retain the support arm in said released and engaged positions.

In a further embodiment, latch bias means is provided to urge the latch arm into engagement with the support arm. The latch bias means may conveniently be provided by a spring extending between the latch arm and the body.

In a particularly preferred embodiment, locking means is provided for engagement with the support arm when the support arm is in the engaged position to releasable lock the support arm in the engaged position. The locking means may be provided by a key operated lock mounted on the body, the lock having a locking bolt which is engagable with an associated receiver slot in the support arm.

In a preferred embodiment, the locking means is a locking arm mounted on the body having catch means at an outer end of the locking arm for releasable engagement with the support arm when the support arm is in the engaged position. The locking arm may be a spring clip having a hooked outer end for engagement with an associated locking pin on the support arm.

In a preferred embodiment, the locking arm is a spring-loaded pawl. Preferably, the pawl is pivotally mounted on the latch arm, a wheel mounting axle on the support arm engagable with the pawl as the arm moves from the released position to the engaged position to deflect the pawl for location of the axle behind the pawl.

Conveniently, a locking arm release tool is provided engagable with the locking arm to hold the locking arm in a released position to disengage the support arm from the locking arm.

In a preferred embodiment, a support arm bias means is provided to urge the support arm towards the engaged position. Conveniently, the support arm bias means may be provided by means of a spring mounted between the support arm and the body. Means may be provided to adjust spring tension.

In one embodiment of the invention, the brake means is a brake pad. In an alternative arrangement, the brake means comprises a locking shaft mounted on one of the support body or the wheel, the locking shaft being releasable engagable with one or more complementary slots in the other of the support body and the wheel when the wheel is in the engaged position. Ideally, the locking shaft is provided on the support body and a number of the associated slots are provided spaced-apart around a rim of the wheel.

In another embodiment, a latch release means is provided on the body to move the latch arm into a released position when the body is raised a preset distance from the surface of the ground over which the wheel travels. Preferably, the latch release means is a rod slidable mounted in an associated vertical bore in the body, the rod having an upper end which projects outwardly of the body for attachment to a trolley to mount the device on the trolley, a lower end of the rod engagable with the latch arm upon upward movement of the rod in the bore by a preset amount.

In some cases, means may be provided for locking the rod in a disengaged position.

In another embodiment, a shroud is provided on the body in front of the wheel, the shroud having a ground clearance which allows free passage of the shroud over the stop means. The shroud may be provided by a flap or brush mounted at a front end of the body in front of the wheel.

In a further embodiment, the stop means is a mat having a number of spaced-apart projections extending upwardly from a top surface of the mat for engagement with and operation of the brake trigger when the vehicle is wheeled across the mat.

In a particularly preferred embodiment, the stop means is formed by a matrix of spaced-apart trip buttons mounted across an exit of the premises, each trip button engagable with the support arm for movement of the support arm between the released position and the engaged position. Preferably, each trip button has a through hole for reception of an associated ground-engaging fastener for mounting the trip button on the ground.

In a further embodiment, the brake means is mounted on the support arm and comprises a locking shaft on the support arm engagable with complementary slots in a rim of the wheel when the support arm is in the engaged position.

In another embodiment, the brake means is mounted at a lower end of a support arm which is pivotally mounted on the support body for movement between a raised disengaged position and a lowered ground-engaging position to support the wheel clear of the ground, the brake trigger being provided at the lower end of the support arm.

### Detailed Description of the Invention

The invention will be more clearly understood by the following description of some embodiments thereof, given by way of example only, with reference to the accompanying drawings, in which;
Fig. 1 is an exploded perspective view of a trolley security device according to the invention,
Fig. 2 is a sectional elevational view of the security device,
Fig. 3 is a detail perspective partially cut-away view of the device mounted on a trolley,
Fig. 4 is a detail perspective view of portion of the device,
Fig. 5 is a diagrammatic side view of a trolley on which the device is mounted,
Fig. 6 is a plan view of portion of a stop mat associated with the device, the mat for mounting at an exit of a premises,
Fig. 7 is a sectional elevational view of the mat portion,
Figs. 8 to 10 are side sectional elevational views of the device in use,
Fig. 11 is a side sectional elevational view of another trolley security device;
Fig. 12 is a sectional view taken along the line XII-XII of Fig. 11;
Fig. 13 is a front elevational view of portion of the security device;
Fig. 14 is a view similar to Fig. 11 of another trolley security device;
Fig. 15 is a view similar to Fig. 14 of another trolley security device;
Fig. 16 is a view similar to Fig. 14 of a further trolley security device;
Fig. 17 is a sectional elevational view of a trip button forming portion of stop means for the trolley security device;
Fig. 18 is a sectional elevational view of the trip button;
Fig. 19 is a plan view of the trip button;
Fig. 20 is a view similar to Fig. 17 of another trip button arrangement;
Fig. 21 is a side sectional elevational view of another trolley security device;
Fig. 22 is a detail side sectional elevational view showing portion of the trolley security device of Fig. 21;
Fig. 23 is another view similar to Fig. 21 showing the trolley security device of Fig. 21;
Fig. 24 is a view similar to Fig. 22 with the device shown in a braked position;
Fig. 25 is a detail side sectional elevational view of portion of another trolley security device;
Fig. 26 is a view similar to Fig. 25 showing the device in a braked position;
Fig. 27 is a side sectional elevational view of another trolley security device;
Fig. 28 is a front elevational view of the security device of Fig. 27;
Fig. 29 is a front elevational view of another trolley security device;
Fig. 30 is a diagrammatic side sectional elevational view of the trolley security device of Fig. 29; and
Fig. 31 is a view similar to Fig. 30 showing the trolley security device in another operating position.

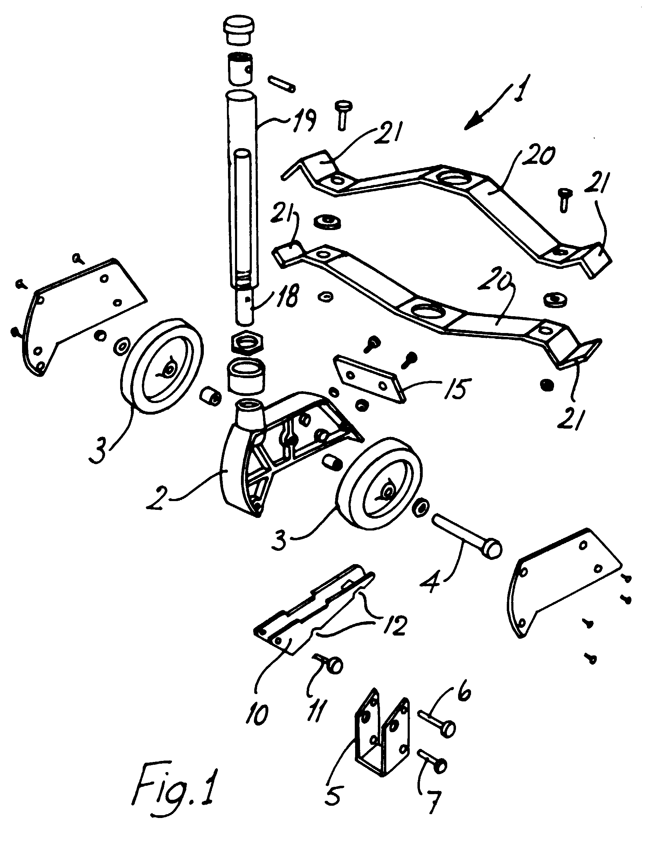

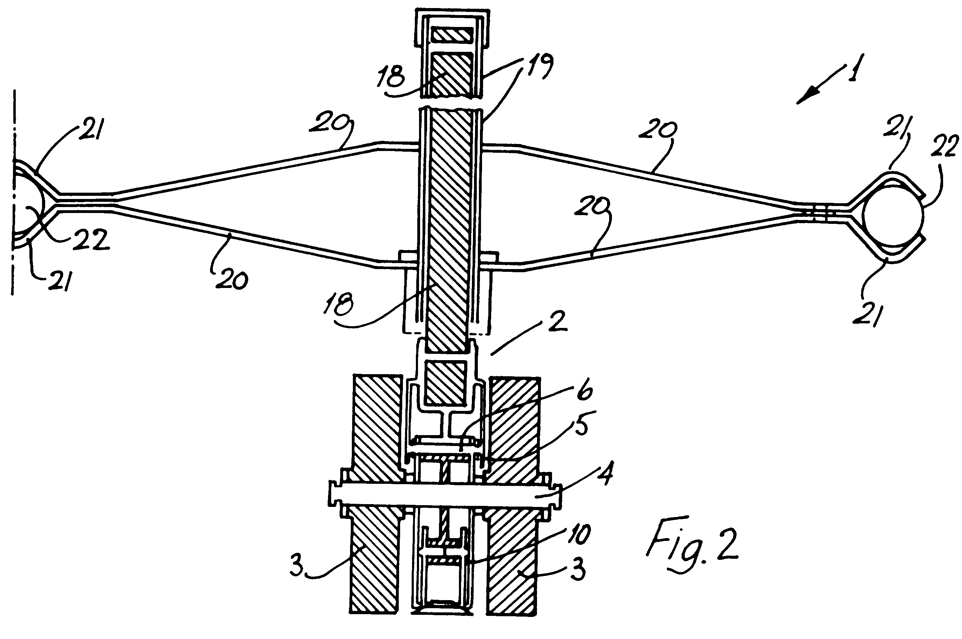

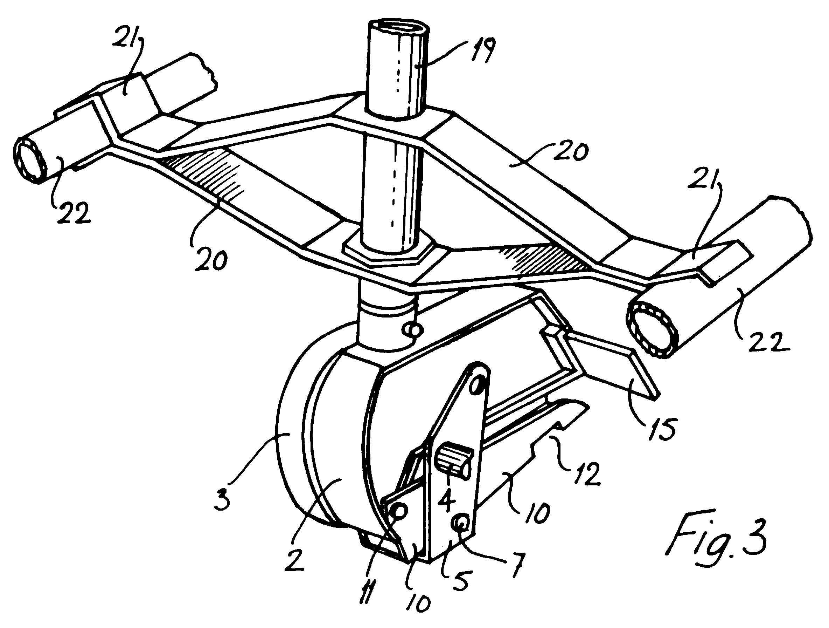

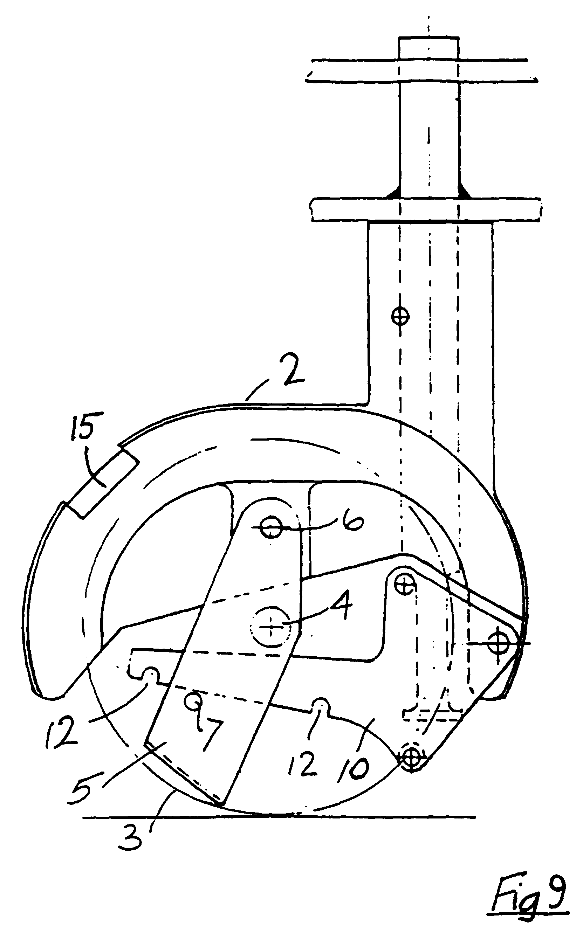

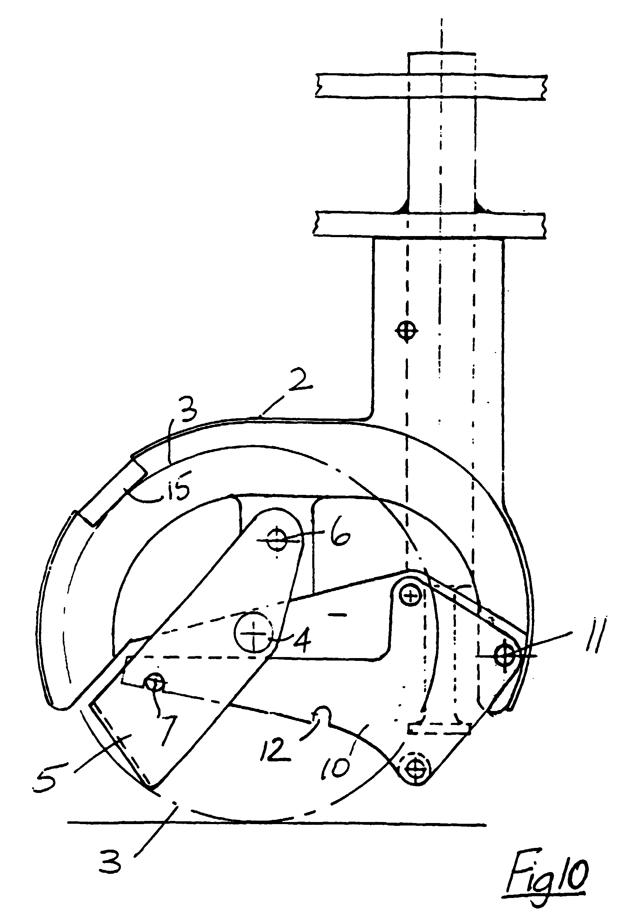

Referring to the drawings, an initially to Figs. 1 to 10 thereof, there is illustrated a trolley security device according to the invention and indicated generally by the reference numeral 1. The security device 1 has a body 2. A pair of wheels 3 are mounted by an axle 4 on a U-shaped wheel support arm 5 which is pivotally mounted at it's upper open end on the body 2 by means of a pivot pin 6. A locking pin 7 is provided adjacent a lower end of the wheel support arm 5. A latch arm 10 is pivotally mounted on the body 2 by a pivot pin 11 such that it extends generally horizontally through the wheel support arm 5 as shown in Fig. 3. Slots 12 on an underside of the locking arm 10 are engagable with the locking pin 7 on the wheel support arm 5. A brake pad 15 is mounted on a rear wall of the body 2 for engagement by the wheels 3 as will be described later. A rod 18 is attached to an upper end of the body 2 and extends upwardly, being slidable held within a tubular outer casing 19. Mounting brackets 20 are secured on the casing 19 and have outer ends 21 for clamping engagement of the tubular frame 22 of a trolley as shown in Fig. 2.

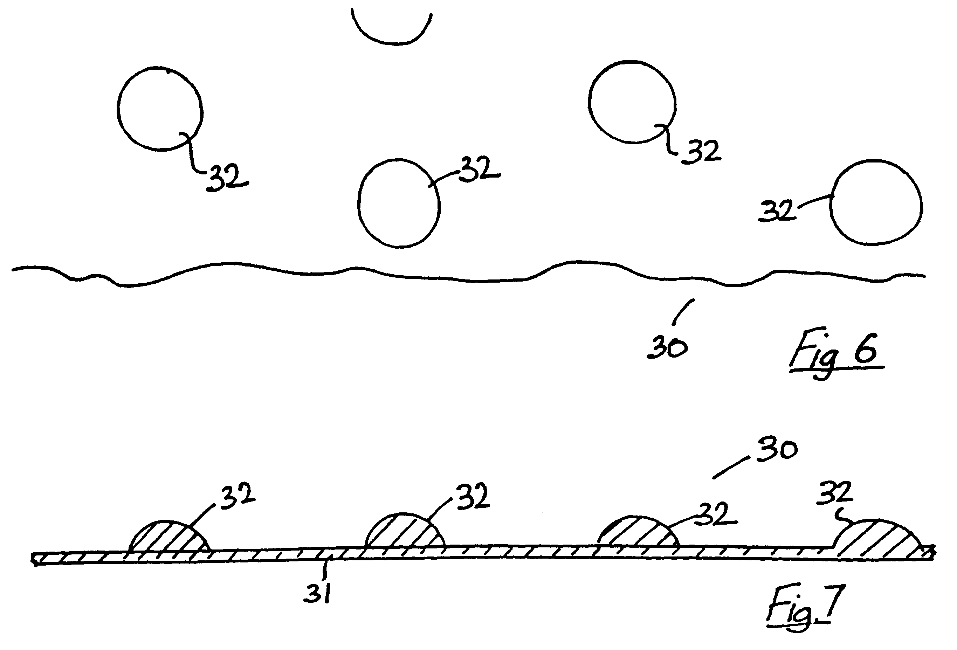

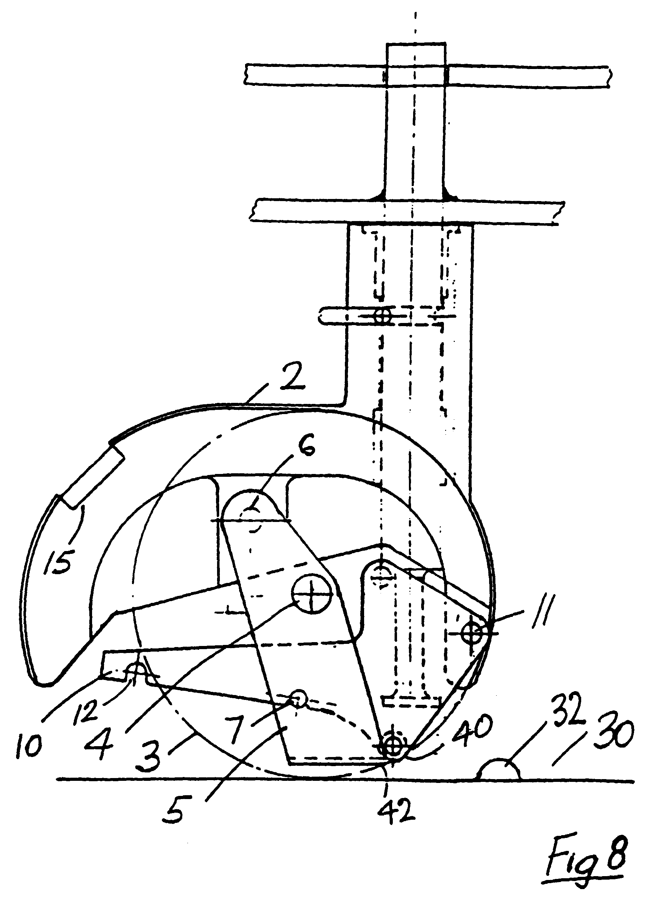

Figs. 6 and 7 show stop means formed by a stop mat 30 for use in association with the device 1. The stop mat 30 has a base portion 31 with a number of spaced-apart projections 32 upstanding on the base 31. The stop mat 30 is mounted on the ground across an exit of the premises. Instead of the mat 30, as shown, individual studs carrying the projections 32 may be directly mounted in the ground at the exit.

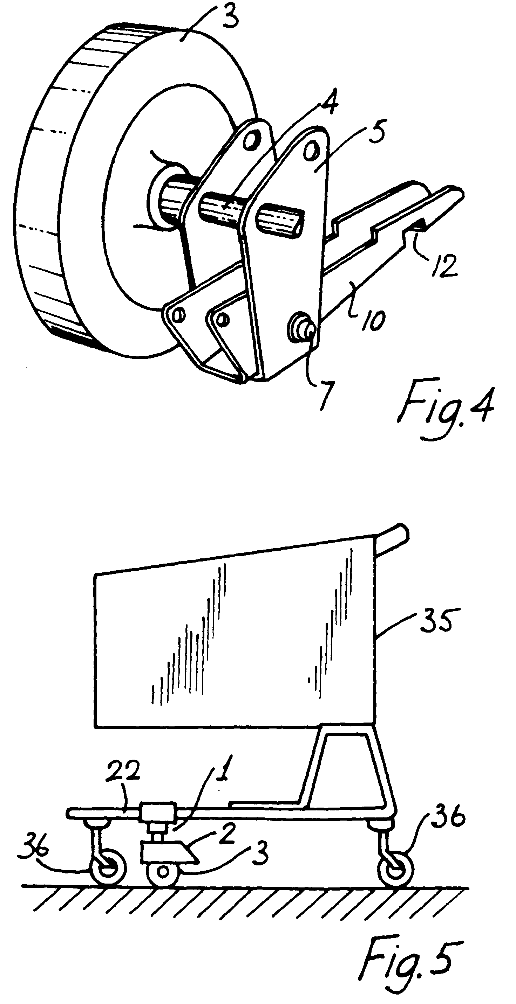

In use, a stop mat 30 is provided at each exit from a premises. Trolleys 35 (Fig. 5) to be used within the premises are each fitted with one of the devices 1 which are attached at an underside of each trolley 35 (see Fig. 5). For normal operation the wheels 3 freely travel along the ground together with wheels 36 of the trolley 35. However, should a person try to leave the premises with the trolley 35, as the trolley 35 is pushed over the stop mat 30, the projections 32 on the stop mat 30 engage a front end 40 of the latch arm 10 (Fig. 8) pivoting it upwardly to release the locking pin 7 on the wheel support arm 5. Further movement of the trolley 35 across the stop mat 30 engages the projections 32 with a lower end 42 of the wheel support arm 5 moving it rearwardly, the wheels 3 being pushed back against the brake pad 15 to slow and halt the trolley 35 gradually. In this manner, the wheel support arm 5 forms a brake trigger for engagement of the brake pad 15 with the wheels 3 as the trolley is wheeled over the stop mat 30. With the wheels 3 in the rearward position, the rearmost slot 12 on the latch arm 10 engages with the locking pin 7 on the wheel support arm 5 to retain the wheels 3 in the rearward braked position.

It will be appreciated that instead of providing the security device as an extra wheel on the trolley, it may be provided as one of the trolley wheels. In some cases, two or more of the security devices may be mounted on the trolley or incorporated in the trolley wheels.

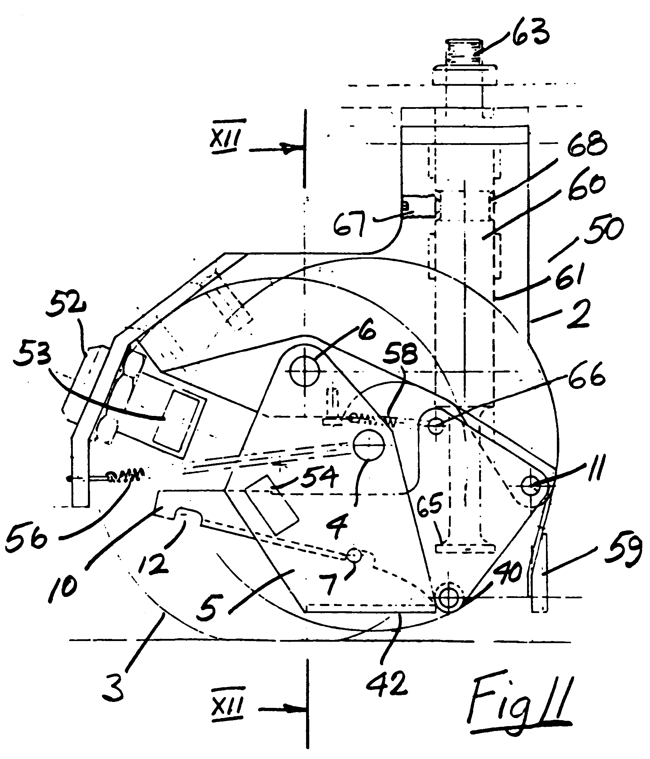

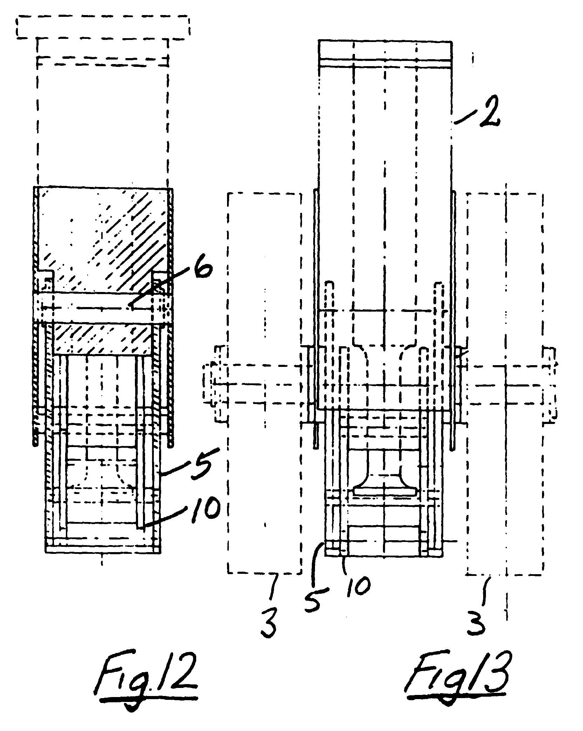

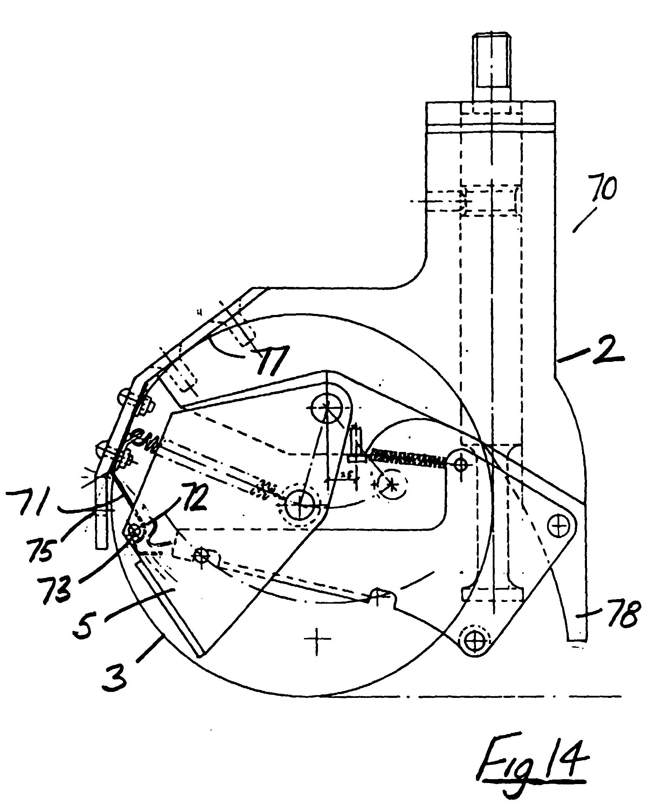

Referring now to Figs. 11 to 13, there is illustrated another trolley security device 50 which is largely similar to the trolley security device described previously with reference to Figs. 1 to 10 and like parts are assigned the same reference numerals. In this case, a key-operated lock 52 is provided on the body 2 for locking the support arm 5 and hence the wheels 3 in the rearward braked position. The lock 52 is a conventional barrel lock having a spring-loaded locking bolt 53 which is engagable with an associated receiver slot 54 in the support arm 5 when the support arm 5 is in the rearward engaged position. A support arm bias spring 56 is provided extending between the body 2 and the axle 4 to urge the support arm 5 towards the rearward engaged position.

A latch arm bias spring 58 is provided mounted between the body 2 and the latch arm 10 urging the latch arm 10 in an anti-clockwise direction as illustrated in Fig. 11, to retain the latch arm 10 in engagement against the locking pin 7 of the wheel support arm 5. This advantageously ensures positive engagement of the latch arm 10 with the wheel support arm 5 at all times.

At a front end of the body 2, a shroud is provided to prevent ingress of large stones, waste or the like which might inadvertently trigger the braking mechanism. In this case, the shroud is provided by a downwardly depending flap 59 mounted at a front end of the body 2. Clearance between a lower end of the flap 59 and the ground is such that the projections 32 of the stop mat 30 can pass under the flap 59 for engagement with the support arm 5.

Latch release means is provided on the body 2 to move the latch arm 10 into a released position when the body 2 is raised a preset distance from the ground such as when a shopper attempts to lift the trolley over the stop means. In this case, the latch release means is formed by a rod 60 slidable mounted in a vertical bore 61 in the body 2. The rod 60 has an upper end 63 which is threaded for mounting the security device 50 on a trolley in place of a conventional castor. A lower end of the rod 60 has a flange 65 which is engagable with an associated pin 66 on the latch arm 10 when the trolley is raised and the body 2 slides downwardly on the rod 60. The rod 60 thus releases the latch arm 10 and the spring 56 draws the wheel support arm 5 rearwardly into the braked position in which it is locked. A grub screw 67 extends through a side wall of the bore 61 for engagement with a circumferential groove 68 on the rod 60 for locking the rod in a disengaged position, fast on the body 2.

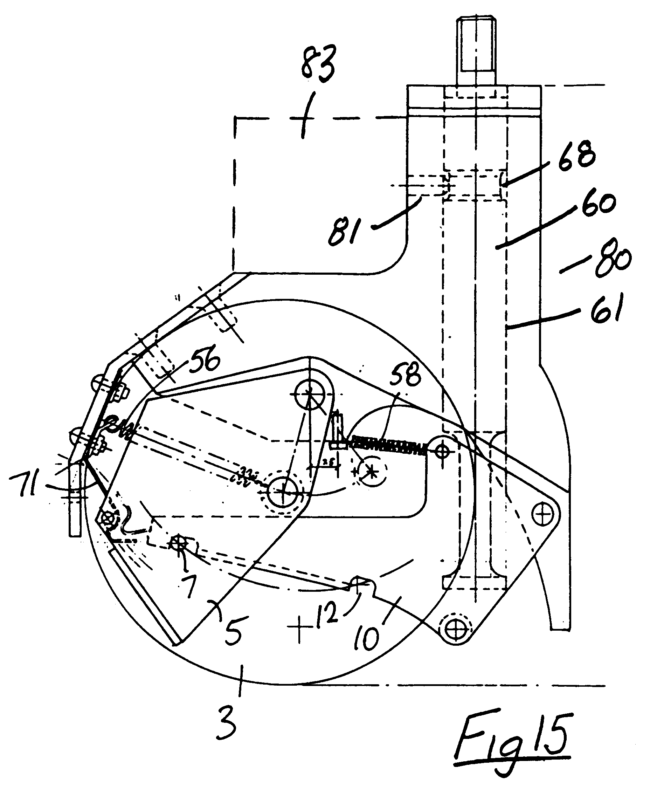

Referring now to Fig. 14, there is illustrated another trolley security device 70 which is largely similar to the trolley security device described previously and like parts are assigned the same reference numerals. In the illustration, the wheels 3 are shown in the braked position. In this case, the locking means for the wheel support arm 5 is a spring clip 71 mounted at a rear of the body 2 and extending forwardly and downwardly for engagement with the wheel support arm 5. A lower end 72 of the spring clip 71 is cranked for engagement with an associated locking pin 73 on the wheel support arm 5. A through hole 75 is provided in a rear face of the body 2 for insertion of a thin rod to push the clip 71 forwardly for release and resetting of the support arm 5.

In this case also, the wheels 3 engage an inner rear surface 77 of the housing 2 to brake the wheels 3. The inner surface 77 may be roughened such as by knurling to improve grip.

A shroud is provided at a front end of the body 2, in this case by a downwardly depending skirt 78.

Fig. 15 shows a trolley security device 80 which is essentially the same as the trolley security device of Fig. 14. In this case, however, a retractable pin 81 engages within the groove 68 of the rod 60 to prevent axial movement of the rod 60 within the bore 61. The pin 81 has an associated release mechanism 83 illustrated diagrammatically in the drawing. The release mechanism 83 may be of any suitable type. For example, it may be conveniently, electronically operated for retraction of the pin 81 upon movement of the trolley outside a defined area. The release device 83 may be triggered by a radio signal, for example. Conveniently, the release device 83 may be battery operated. To save power, thus extending the useful life of the battery, a switch may be provided so that the release mechanism 83 is in a normally off position, an initial lifting of the trolley switching on the release mechanism 83 for retraction of the pin 81 if the trolley is moved through an exit. This advantageously ensures the lift locking mechanism is not accidentally triggered within the premises during normal use of the trolley. It will be appreciated that initial lift of the trolley arms the anti-lift trip, however, it will not engage if no secondary signal is received, e.g. from a transmitter at the exit. Thus, in normal use within the premises, no power is consumed thus extending battery life.

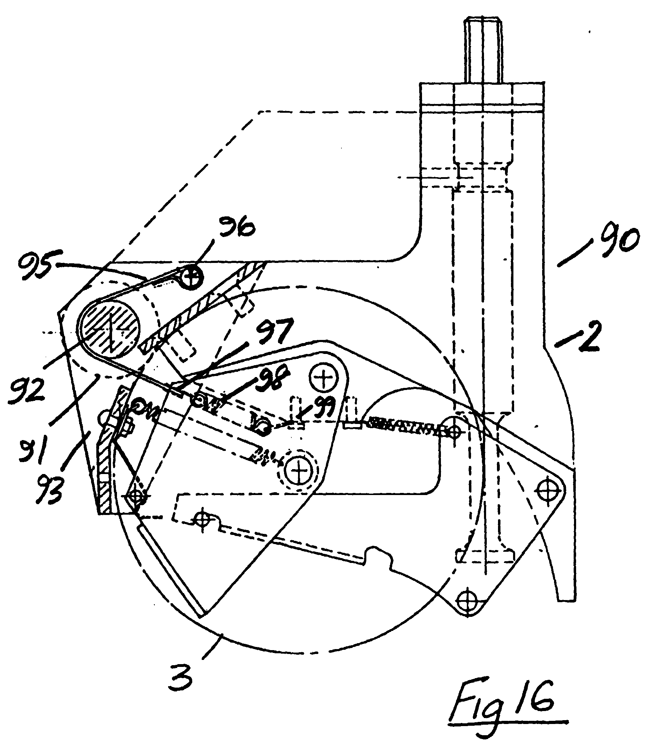

Referring now to Fig. 16, there is illustrated another trolley security device 90 which is largely similar to the previously described trolley security devices and like parts are assigned the same reference numerals. The wheels 3 are again shown in a rearward braked position. In this position, the wheels 3 engage with a pair of associated friction wheels 91 mounted on a shaft 92 which is rotatably supported on a bracket 93. A band brake 95 has a fixed end 96 mounted on the bracket 93 and is led around the shaft 92 having a lower end 97 connected via an adjustable spring 98 to an anchor point 99 on the body 2.

Adjustment of spring tension can increase or decrease the effective rolling resistance of the wheels 3. Rotation of the shaft 92 and hence the rolling resistance applied to the wheels 3 may be resisted in any suitable fashion such as by hydraulic means as an alternative to the band brake.

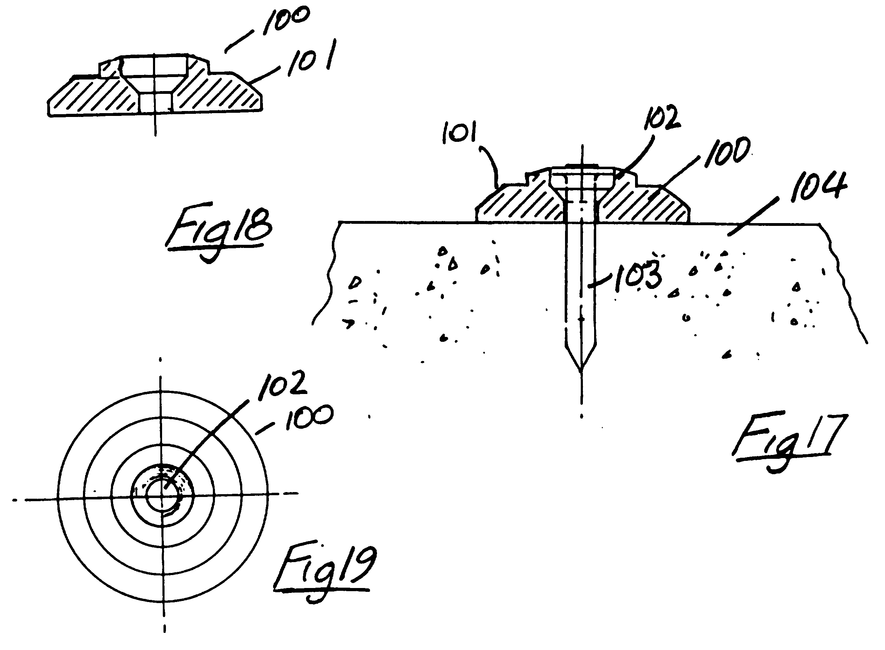

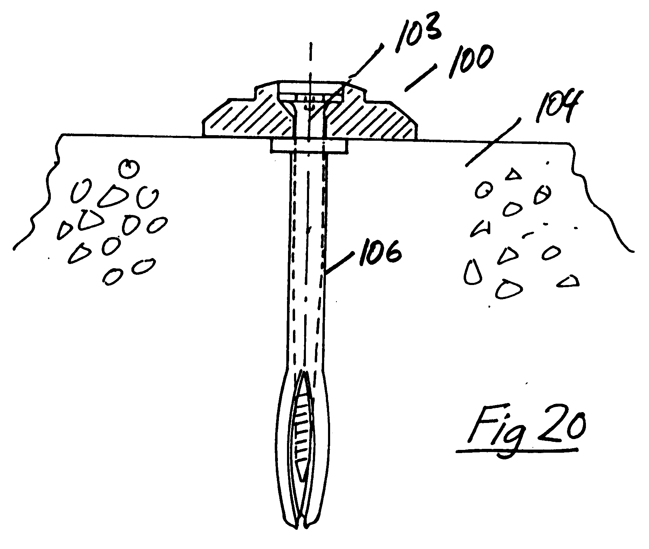

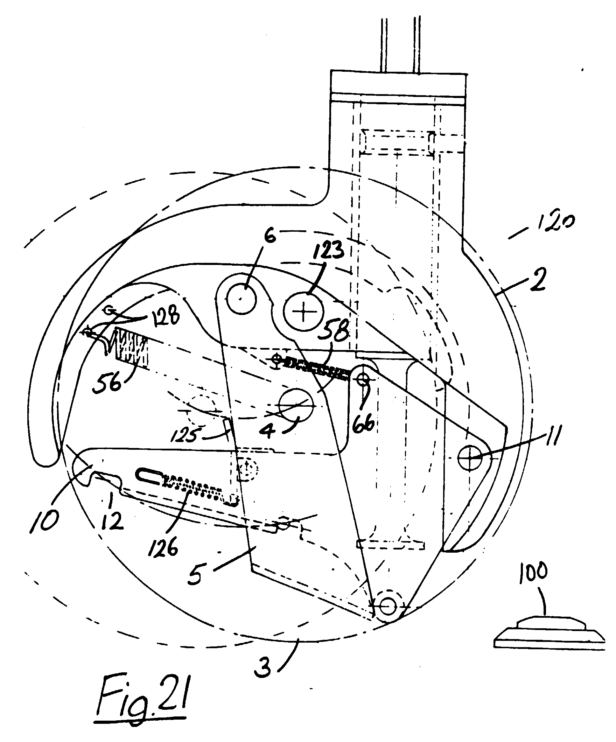

Referring now to Figs. 17 to 19, there is illustrated a trip button 100 forming portion of the stop means. A number of the trip buttons 100 are laid down in a matrix across an exit of the premises in a similar arrangement to the projections on the mat shown in Fig. 6 and 7 for engagement with the wheel support arm 5 of the trolley security device as it is moved across the exit. Ideally, the trip buttons 100 are spaced-apart a distance less than the distance between outer side faces of the wheels 3. It will be noted that each trip button 100 has a sloped side 101. A central through hole 102 is provided for engagement by a fastener, in this case a nail 103, for securing the trip button 100 in the ground 104 at an exit of the premises. The nails 103 can conveniently be driven into the ground 4 by means of a Hilti (Registered Trade Mark) gun or the like for rapid and easy formation of a matrix of trip buttons 100 across an exit of the premises.

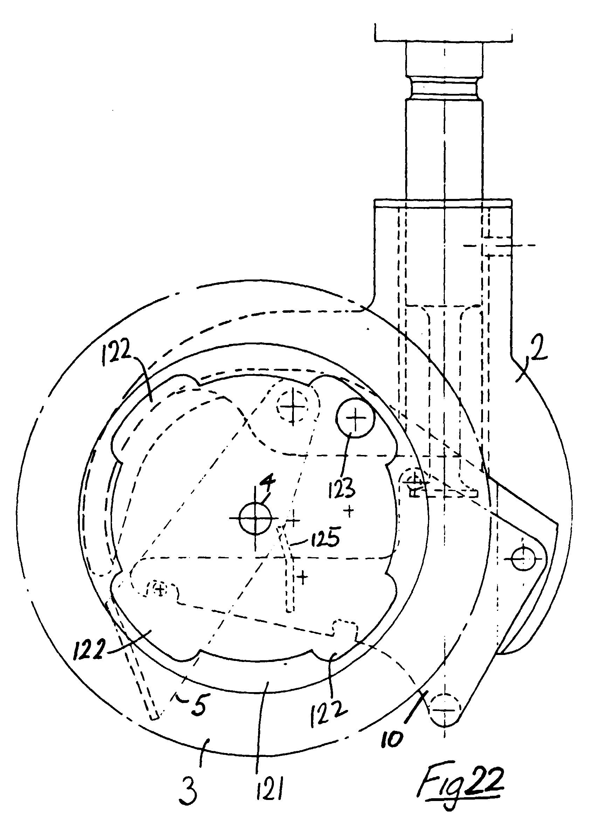

Fig. 20 shows an alternative fastener arrangement. In this case, a hole is drilled in the ground 104 for reception of an expandable plug 106 which is inserted into the hole prior to driving the nail 103 into the plug 106 which expands the plug 106 to retain the nail 103 in the ground 104.

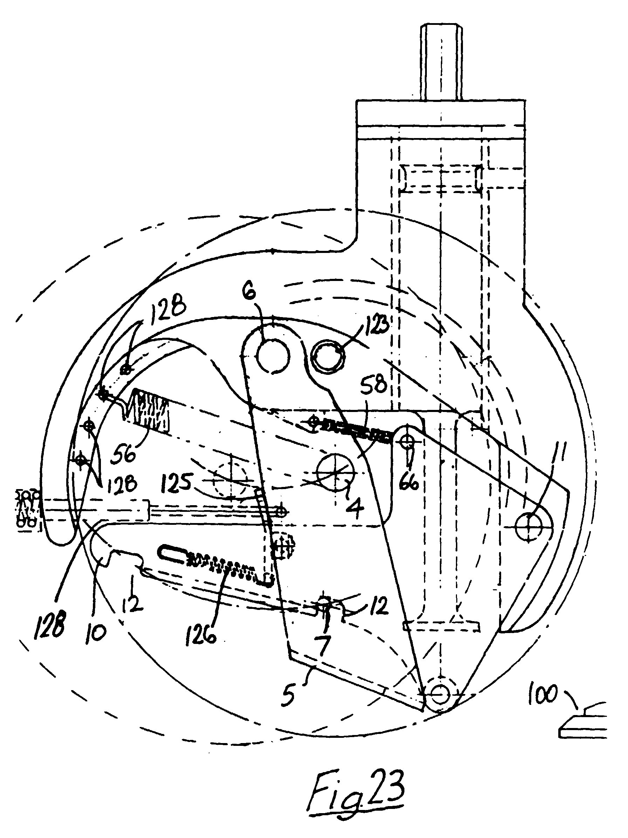

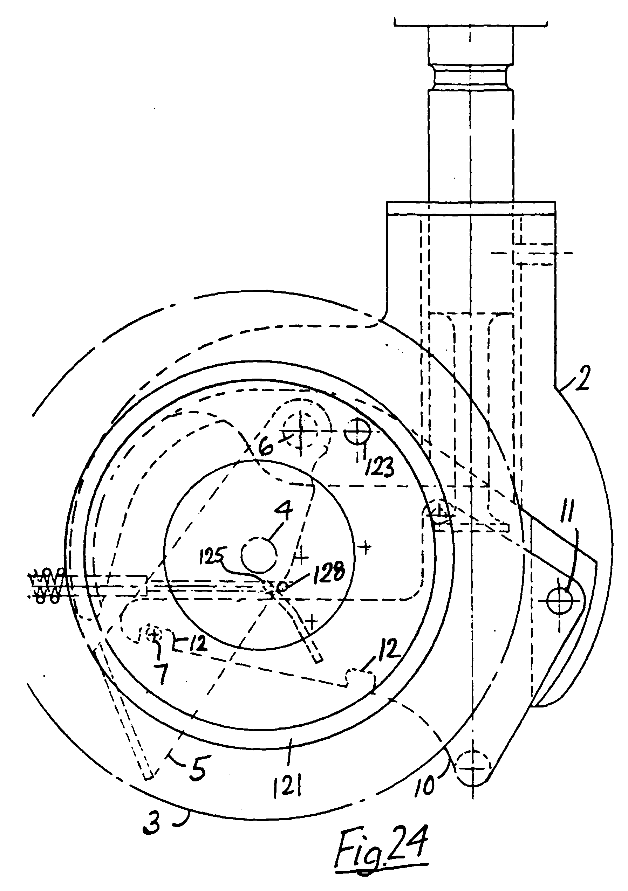

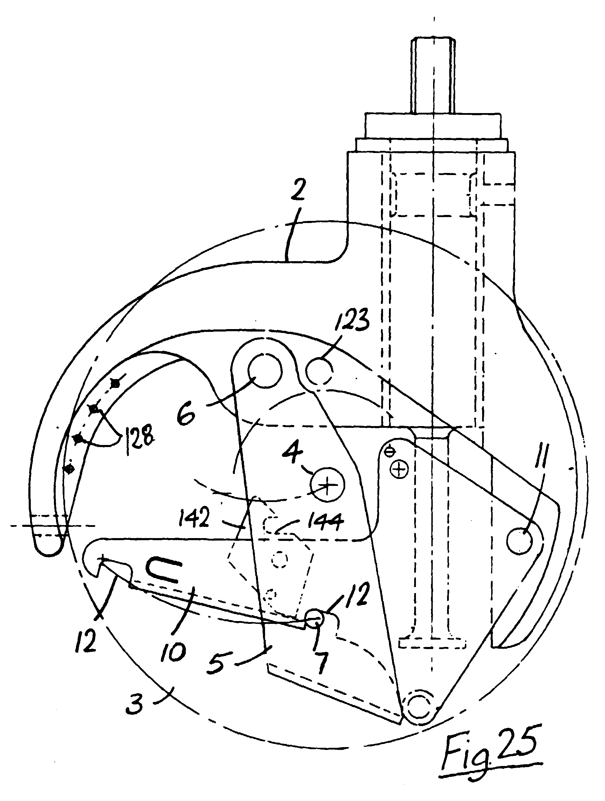

Referring now to Figs. 21 to 24, another trolley security device 120 is shown. Parts similar to those described previously are assigned the same reference numerals. In this case, an inner rim 121 of the wheel 3 has a number of spaced-apart slots 122. A locking shaft 123 fixed on the housing 2 is engagable within the slots 122 when the wheel 3 is moved rearwardly to lock the wheel 3 on the housing. In this case, the locking means for the wheel support arm device comprises a pawl 125 pivotally mounted on the latch arm 10. The pawl 125 is biassed by a spring 126 into an upright position and can pivot back against spring bias to allow passage of the axle 4 over the pawl 125 as the wheel 3 moves rearwardly to lock the axle 4 behind the pawl 125 as shown in Fig. 22. A release tool 128 (Figs. 23 and 24) can be inserted through an opening in a rear of the body 2 to engage and pull back the pawl 125 (as shown in Fig. 24) to allow forward movement of the wheel support arm 5 to reset the device 120. To adjust the tension of the spring 56 for the support arm 5 a number of spaced-apart mounting holes 128 are provided on the support body 2.

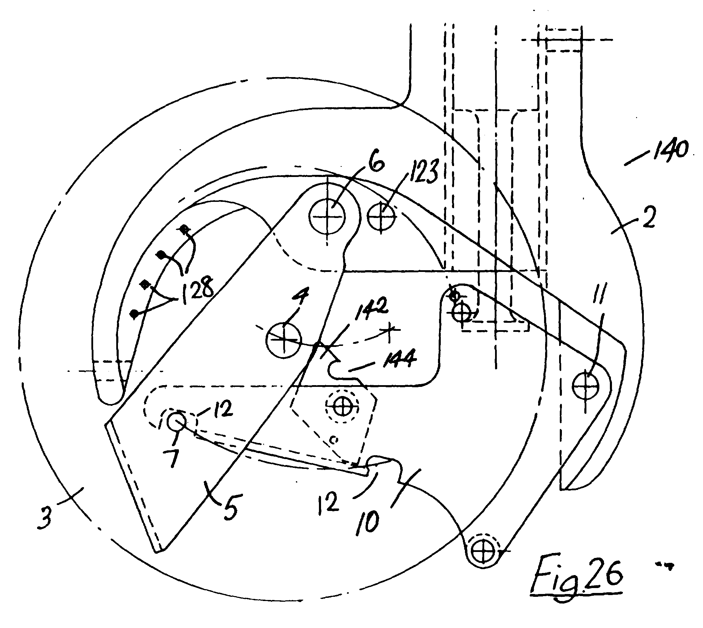

Referring now to Figs. 25 and 26, there is shown another trolley security device 140. This is largely similar to the previously described trolley security device and like parts are assigned the same reference numerals. In this case, the pawl for locking the axle 4 comprises a plate 142 pivotally mounted on the latch arm 10 and having a groove 144 in a front edge of the plate 142 for engagement by the release tool 128.

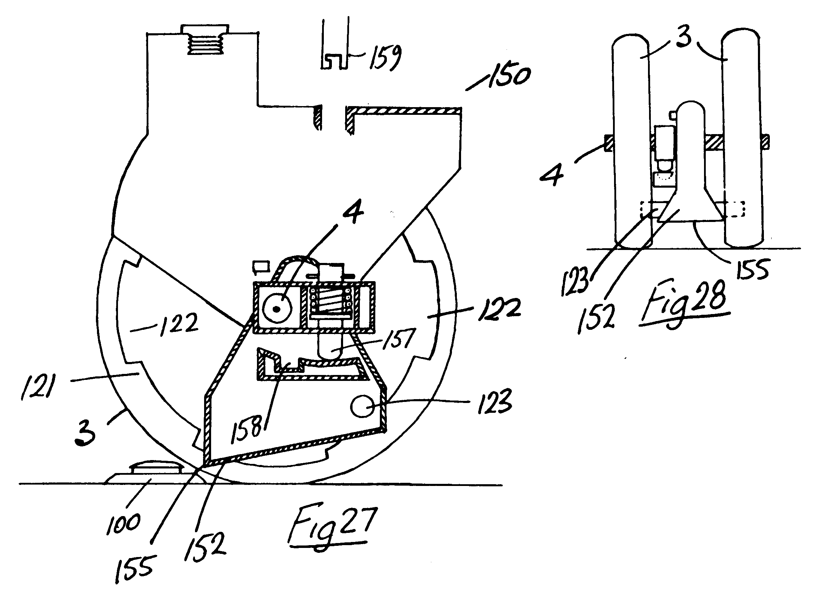

Referring now to Figs. 27 and 28, another trolley security device according to the invention is shown indicated generally by the reference numeral 150. Parts similar to those described previously are assigned the same reference numerals. In this case, a tripping arm 152 is pivotally mounted on the axle 4. The locking shaft 123 for engagement within the slots 122 on the rim 121 of each wheel 3 is carried by the arm 152. A lower front end 155 of the arm 152 is engagable with the trip buttons 100 of the stop means to pivot the arm 152 rearwardly. Rearward pivotal movement of the arm 152 moves the locking shaft 123 outwardly for engagement within slots 122 in the wheels 3 to brake the wheel 3. In the braked position, a spring-loaded plunger 157 engages with an associated socket 158 formed on the arm 152 to lock the wheel in the braked position. A plunger release tool 159 is engagable with an upper end of the plunger 157 to retract the plunger 157 to release the arm 152.

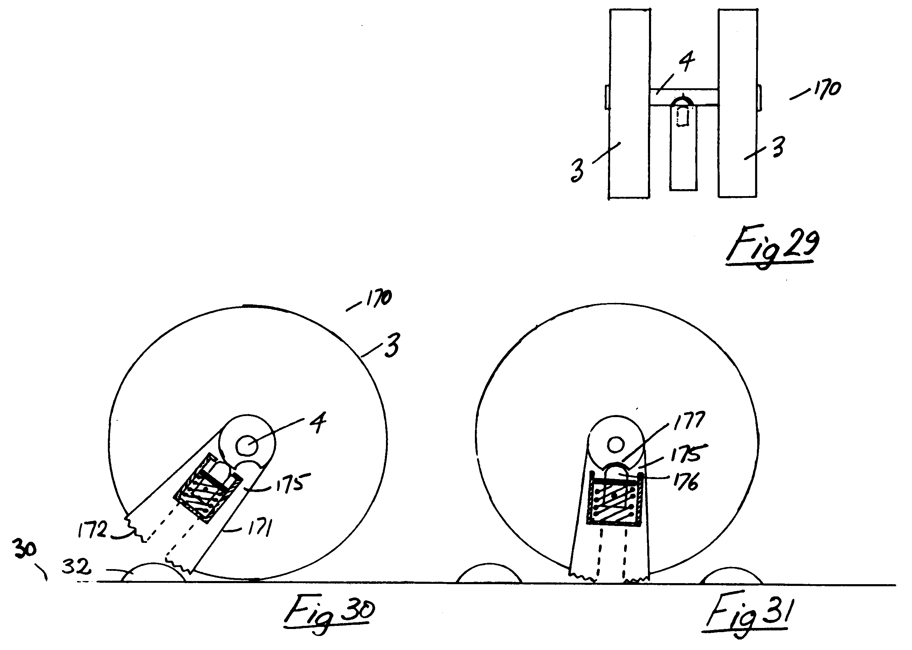

Referring now to Figs. 29 to 31, another trolley security device 170 is shown. Parts similar to those described previously are assigned the same reference numerals. In this case, a braking arm 171 is pivotally mounted on the wheel axle 4. Upon movement of the wheels 3 over the stop means, a lower end 172 of the arm 171 is engagable with the projections 32 on the stop mat 30 to move the arm 171 rearwardly such that the lower end 172 of the arm 171 engages the ground, lifting the wheels 3 clear of the ground and forming a brake or skid to stop the trolley. A spring-loaded plunger assembly 175 is provided to lock the arm 171 in the braked position shown in Fig. 31. A release tool 159 of the type previously described is provided to engage and retract a plunger 176 from a socket 177 of the assembly to release the arm 171 for forward movement into the released position.

While the security device of the invention has been described above for use with a trolley, it is envisaged that the security device may be used in other types of vehicle (which may be a powered vehicle) also, in particular to restrict use of the vehicle to a designated area.

It will be appreciated that in some cases the security device may be provided without the latch release means which forms the anti-lift trip mechanism. Further, a damper may be provided on the anti-lift trip mechanism to delay operation of the anti-lift trip mechanism.

The invention is not limited to the embodiments hereinbefore described which may be varied in both construction and detail.

## Claims

1. A security device (1, 120, 150, 170) for a vehicle such as a trolley (35) or the like, for prevention of unauthorised removal of the vehicle from a premises, the security device being of the type comprising a support body (2) having means (20, 21) for attachment to the vehicle, brake means (15) for a ground engaging wheel (3) on the trolley (35), the brake means being movable between a disengaged inoperative position and an engaged operative wheel-braking position, a brake trigger (5, 152, 171) mounted on the support body operable to move the brake means between the disengaged inoperative position and the engaged wheel-braking position, and stop means (32, 100) for mounting at an exit of the premises for engagement by and operation of the brake trigger (5, 152, 171) to brake the wheel, characterised in that the stop means comprises a number of trip buttons (100) or projections (32) for mounting spaced-apart across an exit of the premises, each trip button (100, 32) projecting upwardly from the ground at the exit for engagement with and operation of the brake trigger (5, 152, 171) when the vehicle is wheeled across the exit.

2. A device as claimed in claim 1 wherein the wheel (3) and the brake means (15, 95, 122, 123, 172) are movable relative to each other between a separated released position and an engaged braked position, wherein one of the wheel (3) and the brake means (15, 95, 122, 123, 172) forms a fixed part on the support body (2) and the other of the wheel (2) and the brake means (15, 95, 122, 123, 172) forming a movable part on the support body (2) being movable between the released position and the engaged position, wherein the movable part is carried on a support arm which is mounted on the body for movement between the released position and the engaged position, the brake trigger being provided on the support arm, and wherein the support arm is pivotally mounted on the support body.

3. A device as claimed in claim 2 wherein latch means is provided for releasable retaining the support arm in the released position.

4. A device as claimed in claim 3 wherein the latch means is a latch arm pivotally mounted on the body and releasable engagable with the support arm, and wherein the latch arm has a pair of spaced-apart slots corresponding to the released position and the engaged position, the slots engagable by the support arm to retain the support arm in said released and engaged positions.

5. A device as claimed in any of claims 2 to 4 wherein locking means is provided for engagement with the support arm when the support arm is in the engaged position to releasable lock the support arm in the engaged position.

6. A device as claimed in any preceding claim wherein the brake means comprises a locking shaft mounted on one of the support body or the wheel, the locking shaft being releasable engagable with one or more complementary slots in the other of the support body and the wheel when the wheel is in the engaged position.

7. A device as claimed in claim 6 wherein the locking shaft is provided on the support body and a number of the associated slots are provided spaced-apart around a rim of the wheel.

8. A device as claimed in any of claims 4 to 7 wherein a latch release means is provided on the body to move the latch arm into a released position when the body is raised a preset distance from the surface of the ground over which the wheel travels.

9. A device as claimed in any preceding claim wherein the stop means is a mat having a number of spaced-apart projections extending upwardly from a top surface of the mat for engagement with and operation of the brake trigger when the vehicle is wheeled across the mat.

10. A device as claimed in claim 2 wherein the brake means is mounted on the support arm and comprises a locking shaft on the support arm engagable with complementary slots in a rim of the wheel when the support arm is in the engaged position.

11. A device as claimed in claim 1 wherein the brake means is mounted at a lower end of a support arm which is pivotally mounted on the support body for movement between a raised disengaged position and a lowered ground-engaging position to support the wheel clear of the ground, the brake trigger being provided at the lower end of the support arm.

## Patentansprüche

1. Sicherheitsvorrichtung (1, 120, 150, 170) für ein Fahrzeug, wie z.B. einen Transportwagen (35) oder dergleichen, zum Verhindern des unerlaubten Entfernens des Fahrzeugs von einem Gelände, wobei die Sicherheitsvorrichtung derart gestaltet ist, daß sie ein Trägerelement (2) mit Einrichtungen (20, 21) zum Befestigen am Fahrzeug umfasst, sowie eine Bremseinrichtung (15) für ein in Bodenkontakt stehendes Rad (3) am Transportwagen (35), wobei die Bremseinrichtung zwischen einer ausgerückten, unbetätigten Stellung und einer eingerückten, betätigten Radbremsstellung verstellbar ist, einen am Trägerelement angebrachten Bremsauslöser (5, 152, 171) zum Verstellen der Bremseinrichtung zwischen der ausgerückten, unbetätigen Stellung und der eingerückten Radbremsstellung, und eine an einem Ausgang des Geländes anbringbare Stoppvorrichtung (32, 100), welche zum Bremsen des Rads in den Bremsauslöser (5, 152, 171) eingreift und diesen betätigt, dadurch gekennzeichnet, daß die Stoppvorrichtung eine Anzahl von in Abständen zueinander quer über einen Ausgang des Geländes anbringbare Anschlagelemente (100) oder Vorsprünge (32) aufweist, wobei jedes Anschlagelement (100, 32) am Ausgang vom Boden nach oben ragt, um in den Bremsauslöser (5, 152, 171) einzugreifen und diesen zu betätigen, sobald das Fahrzeug aus dem Ausgang herausgefahren wird.

2. Vorrichtung nach Anspruch 1, wobei das Rad (3) und die Bremseinrichtung (15, 95, 122, 123, 172) relativ zueinander zwischen einer gelösten, ausgerückten Stellung und einer eingerückten Bremsstellung verstellbar sind, wobei eines der beiden Teile, entweder das Rad (3) oder die Bremseinrichtung (15, 95, 122, 123, 172), ein feststehendes Teil auf dem Trägerelement (2) bildet, und das jeweils andere der beiden Teile, entweder das Rad (3) oder die Bremseinrichtung (15, 95, 122, 123, 172), ein verstellbares Teil auf dem Trägerelement (2) bildet, welches zwischen der ausgerückten Stellung und der eingerückten Stellung verstellbar ist, wobei das verstellbare Teil auf einem am Trägerelement angebrachten Trägerarm gehalten wird, der zwischen der ausgerückten Stellung und der eingerückten Stellung verstellbar ist, wobei der Bremsauslöser am Trägerarm vorgesehen ist und der Trägerarm drehbar am Trägerelement angeordnet ist.

3. Vorrichtung nach Anspruch 2, wobei eine Verriegelungseinrichtung zum lösbaren Halten des Trägerarms in der ausgerückten Stellung vorgesehen ist.

4. Vorrichtung nach Anspruch 3, wobei die Verriegelungseinrichtung ein Verriegelungsarm ist, der drehbar am Trägerelement angeordnet ist und in lösbaren Eingriff mit dem Trägerarm gebracht werden kann, und wobei der Verriegelungsarm ein Paar beabstandete, der ausgerückten und eingerückten Stellung entsprechende Schlitze aufweist, in welche der Trägerarm eingreifen kann, so daß sie den Trägerarm in der ausgerückten und der eingerückten Stellung halten.

5. Vorrichtung nach einem der Ansprüche 2 bis 4, wobei eine Arretiereinrichtung zum Eingreifen in den Trägerarm in der eingerückten Stellung vorgesehen ist, die den Trägerarm in der eingerückten Stellung lösbar arretiert.

6. Vorrichtung nach einem der vorhergehenden Ansprüche, wobei die Bremseinrichtung einen entweder am Trägerelement oder am Rad angebrachten Verriegelungsschaft aufweist, der in lösbaren Eingriff mit einem oder mehreren zugeordneten Schlitzen in dem entsprechend anderen der beiden Teile, d.h. dem Trägerelement oder dem Rad, gebracht werden kann, wenn sich das Rad in der eingerückten Stellung befindet.

7. Vorrichtung nach Anspruch 6, wobei der Verrieglungsschaft am Trägerelement vorgesehen ist, und rund um eine Felge des Rades eine Anzahl von zugeordneten, voneinander beabstandeten Schlitzen vorgesehen sind.

8. Vorrichtung nach einem der Anprüche 4 bis 7, wobei am Trägerelement eine Entriegelungseinrichtung vorgesehen ist, die den Verriegelungsarm in eine ausgerückte Stellung bringt, sobald das Trägerelement eine vorgegebene Distanz vom Boden, über den das Rad fährt, angehoben wird.

9. Vorrichtung nach einem der vorhergehenden Ansprüche, wobei die Stoppeinrichtung aus einer Matte mit einer Anzahl voneinander beabstandeter Vorsprünge besteht, die sich von einer Oberfläche der Matte nach oben erstrecken, um in den Bremsauslöser einzugreifen und diesen zu betätigen, sobald das Fahrzeug über die Matte gefahren wird.

10. Vorrichtung nach Anspruch 2, wobei die Bremseinrichtung auf dem Trägerarm angebracht ist und einen Verriegelungsschaft am Trägerarm umfasst, der in zugeordnete Schlitze in einer Felge des Rads eingreifen kann, wenn sich der Trägerarm in der eingerückten Stellung befindet.

11. Vorrichtung nach Anspruch 1, wobei die Bremseinrichtung an einem unteren Ende eines Trägerarms angebracht ist, welcher derart drehbar am Trägerelement angeordnet ist, daß er zwischen einer angehobenen, ausgerückten Stellung und einer abgesenkten, in Bodenkontakt stehenden Stellung verstellbar ist, um das Rad vom Boden abgehoben zu halten, wobei der Bremsauslöser am unteren Ende des Trägerarms vorgesehen ist.

## Revendications

1. Un dispositif de sécurité (1,120,150,170) pour un véhicule tel qu'un chariot de transport ou similaire pour empêcher le déplacement non autorisé du véhicule des lieux, ledit dispositif de sécurité de ce type comportant un corps de support (2) avec des moyens de fixation (20,21) au véhicule, un moyen de frein (15) pour une roue (3) du chariot de transport (35) enclenchée au sol, le moyen de frein étant déplaçable entre une position de repos débrayée et une position actionnée embrayée pour le freinage de la roue, un déclencheur de frein (5,152,171) monté sur le corps de support et utilisable pour déplacer le moyen de frein entre la position de repos débrayée et la position embrayée, un moyen d'arrêt (32,100) á fixer á l'issue des locaux pour s'engager avec le déclencheur de frein (5,152,171) et l'actionner pour freiner la roue, caractérisé en ce que le moyen d'arrêt comporte un certain nombre de butées (100) ou saillies (32) á fixer espacées le long de l'issue des locaux, chaque butée (100,32) faisant saillie du sol de l'issue vers le haut pour s'engager avec le déclencheur de frein (5, 152, 171) et l'actionnner lorsque le véhicule est roulé sur l'issue.

2. Un dispositif selon la revendication 1, caractérisé en ce que la roue (3) et le moyen de frein (15,95,122,123,172) sont mobiles l'un par rapport á l'autre entre une position débrayée et une position de freinage embrayée, une des deux parties, c-a-d. la roue (3) ou le moyen de frein (15,95,122,123,172), forme une partie fixe sur le corps de support (2) et l'autre des deux parties, c-a-d. la roue ou le moyen de frein, forme une partie mobile sur le corps de support (2) étant déplaçable entre la position débrayée et la position embrayée, la partie mobile est supportée par un bras de support installé sur le corps pour le mouvement entre la position débrayée et la position embrayée, le déclencheur de frein étant installé sur le bras de support, et ledit bras de support est fixé sur le corps de support de façon á pivoter.

3. Un dispositif selon la revendication 2, caractérisé en ce que un moyen de verrouillage est fourni pour retenir le bras de support de façon à relâcher en position débrayée.

4. Un dispositif selon la revendication 3, caractérisé en ce que le moyen de verrouillage est un bras de verrouillage monté sur le corps de façon á pivoter apte à s'engager avec le bras de support de façon à relâcher, et ledit bras de verrouillage comporte une paire de fentes espacées correspondant aux positions débrayée ou embrayée, les fentes étant mises en prise par le bras de support pour le retenir dans lesdites positions débrayée et embrayée.

5. Un dispositif selon l'une des revendications de 2 á 4, caractérisé en ce qu'un moyen d'arrêt est fourni pour s'engager avec le bras de support quand celui-ci est dans la position embrayée afin de l'ârreter dans ladite position embrayée.

6. Un dispositif selon l'une des revendications précédentes, caractérisé en ce que le moyen de frein comporte un goujon de verrouillage monté sur le corps de support ou la roue, le goujon de verrouillage étant apte à s'enclencher à façon de relâcher dans une ou plusieurs fentes associées dans l'autre des deux parties, c-a-d. le corps de support ou la roue, lorsqu'elle est dans la position embrayée.

7. Un dispositif selon la revendication 6, caractérisé en ce que le goujon de verrouillage est installé sur le corps de support et un certain nombre de fentes associées sont espacées autour d'une jante de la roue.

8. Un dispositif selon les revendications de 4 á 7, caractérisé en ce qu'un moyen de déverrouillage est installé sur le corps pour déplacer le bras de verrouillage dans une position débrayée lorsque le corps est élevé du sol sur lequel la roue circule á une distance préselectionnée.

9. Un dispositif selon l'une des revendications précédentes, caractérisé en ce que le moyen d'arrêt est un tapis comportant un certain nombre de saillies espacées s'étendant de la surface du tapis vers le haut pour s'engager avec le déclencheur de frein et l'actionner lorsque le véhicule est roulé sur le tapis.

10. Un dispositif selon la revendication 2, caractérisé en ce que le moyen de frein est installé sur le bras de support et comporte un goujon de verrouillage sur ledit bras s'emboitant dans les fentes associées situées dans une jante de la roue lorsque le bras de support est dans la position embrayée.

11. Un dispositif selon la revendication 1, caractérisé en ce que le moyen de frein est monté sur l'extrémité basse du bras de support installé sur le corps de support de façon à pivoter pour se déplacer entre une position débrayée élevée et une position enclenchée au sol baissée pour soutenir la roue au dessus du sol, le déclencheur de frein étant placé sur l'extrémité basse du bras de support.
